**Europäisches Patentamt**

**European Patent Office**

**Office européen des brevets**

(19)

(11) Publication number: **0 198 925**

**A1**

(12)

# EUROPEAN PATENT APPLICATION

published in accordance with Art. 158(3) EPC

(21) Application number: **85905105.4**

(22) Date of filing: **09.10.85**

Data of the international application taken as a basis:

(86) International application number:
**PCT/JP85/00561**

(87) International publication number:
**WO86/02633 (09.05.86 86/10)**

(51) Int. Cl.⁴: **C 04 B 35/00**
**B 22 D 11/10, B 22 D 37/00**

(30) Priority: **23.10.84 JP 222486/84**
**05.06.85 JP 121667/85**
**01.07.85 JP 144392/85**

(43) Date of publication of application:
**29.10.86 Bulletin 86/44**

(84) Designated Contracting States:
**DE GB IT**

(71) Applicant: **NIPPON CRUCIBLE CO., LTD.**
**21-3 Ebisu 1-chome**
**Shibuya-ku, Tokyo, 150(JP)**

(72) Inventor: **HOSAKA, Takao**
**1-9-7, Yuyamadai**
**Kawanishi-City Hyogo 666-01(JP)**

(72) Inventor: **SASAKI, Tadao**
**6-10, Suenaricho**
**Takarazuka-City Hyogo 665(JP)**

(72) Inventor: **UEDA, Misao**
**6-1-46, Ishiodai**
**Kasugai-City Aichi 487(JP)**

(72) Inventor: **AKATSUKA, Yoshihiko**
**1-4-2, Fujiyamadai**
**Kasugai-City Aichi 487(JP)**

(72) Inventor: **YAMANAKA, Shingo**
**4-1-1, Fujiyamadai**
**Kasugai-City Aichi 487(JP)**

(72) Inventor: **IWASAKI, Akira**
**2-2-3, Fujiyamadai**
**Kasugai-City Aichi 487(JP)**

(72) Inventor: **TANAKA, Masaharu**
**121-2, Kouzoujichokita 2-chome**
**Kasugai-City Aichi 487(JP)**

(72) Inventor: **NAGAO, Yoshitaka**
**5-240, Sakuragaoka**
**Kaji-City Gifu 509-02(JP)**

(74) Representative: **Pearce, Anthony Richmond et al,**
**Marks & Clerk Alpha Tower Suffolk Street**
**Queensway Birmingham B1 1TT(GB)**

(54) **REFRACTORY CONTAINING ALUMINUM NITRIDE OXIDE, REFRACTORY FOR SLIDING NOZZLE, AND NOZZLE FOR CONTINUOUSLY CASTING STEEL.**

(57) A refractory containing aluminum nitride oxide, comprising 3 parts by weight or more of aluminum nitride oxide, 0.5 to 60 parts by weight of carbon and/or carbonaceous compound, and the balance of other refractories has excellent corrosion resistance against molten pig iron, molten steel, molten slug, etc. and excellent heat impact resistance. In another embodiment, a refractory for sliding nozzle containing 10 to 98 wt % of aluminum nitride, and a nozzle of continuously casting steel containing 3 to 60 wt % of aluminum nitride oxide and 10 to 40 wt % of carbon and/or graphite are also disclosed. Both the refractory and the nozzle have prolonged service lives.

EP 0 198 925 A1

SPECIFICATION

ALUMINUM OXYNITRIDE-CONTAINING REFRACTORIES,
REFRACTORIES FOR SLIDING NOZZLES, AND
NOZZLES FOR CONTINUOUS STEEL CASTING

The present invention relates to an aluminum oxynitride-containing refractory which is of high durability against pig iron, steel and slag, an aluminum oxynitride-containing refractory for a sliding nozzle, which is excellent in corrosion resistance against molten slag, particularly FeO and also in thermal impact resistance, and further to a nozzle for use in continuous steel casting, which is excellent in corrosion resistance and thermal impact resistance and thus is of high durability.

## BACKGROUND ART

With a recent advance of pig iron- and steelmaking technology, a refractory is used under increasingly severer conditions. In order to increase the durability of the refractory, it is necessary to prevent the refractory from reacting with molten materials such as molten pig iron, molten steel and molten slag even when it comes into contact with the molten materials. This object has been attained by development of production technology such as by employing high pressure molding and uniform molding. Even with the conventional refractory materials, in some cases, the object can be attained by suitably selecting the quality of the refractory material, the method of molding the material, and also by suitably combining various starting materials. It is known that if the concentration of FeO in the molten material such as molten pig iron, molten steel and molten slag is high, the refractory is seriously deteriorated. Accordingly, an increase in the corrosion resistance of the refractory against FeO will lead to an increase in the durability of the refractory. For this reason, MgO-C-, $Al_2O_3$-C- and $Al_2O_3$-SiC-C-based refractories, for example, have been produced.

The MgO-C refractory, however, has a disadvantage in that when it is repeatedly heated and cooled during the operation, cracks develop in the refractory. Thus, the MgO-C refractory is limited in its application. The $Al_2O_3$-SiC-C and $Al_2O_3$-C refractories are not sufficiently satisfactory in corrosion resistance. Refractories comprising a refractory made mainly of an oxide-based starting material such as the $Al_2O_3$-SiC-C-based refractory and a non-oxide-based material, such as silicon carbide, silicon nitride or silicon oxynitride, incorporated in the above main refractory are excellent in corrosion resistance and thermal impact resistance.

The non-oxide-based material, however, is converted into $SiO_2$ when oxidized and then easily reacts with the molten metal, particularly FeO in the molten metal and slag. Thus, the above refractories are necessary to more improve. In a case that known refractory materials are used, it is necessary to make extensive investigat'ons on many factors such as the type, amount and quality of the starting material, molding conditions, and combinations of the above factors and production techniques. Accordingly, extraordinary long periods of time and high costs are needed in development of the desired refractory.

Even with such extensive investigations, it is quite difficult to produce a refractory which is sufficiently satisfactory in the resistance against molten pig iron, molten steel and molten slag.

In recent years, with the intensification of quality control of steel and an increase in the continuous casting, a sliding nozzle has been used under increasingly severer conditions. It has, therefore, been desired to develop a sliding nozzle which can be used repeatedly in a stabilized manner.

Bricks for the sliding nozzle are corroded by not only the physical action such as cracking and peeling-apart by rapid thermal impact due to the molten metal and abrasion by the molten metal but also the chemical action of the molten metal and molten slag, particularly FeO. In order, therefore, that bricks for the sliding nozzle are used in a stabilized manner, it is necessary for the bricks to be made of a refractory having excellent thermal impact resistance and corrosion resistance. Heretofore the sliding nozzle has been made of a refractory prepared using alumina as the major component and clay as a binder. In recent years, in order to improve thermal impact resistance and corrosion resistance, a refractory containing carbon has been employed. However, the refractory containing carbon is still unsatisfactory in corrosion resistance against slag. The melt-deterioration or damage of the sliding nozzle is caused by the phenomenon that alumina, steel and slag react with each other and the alumina elutes as a low melting substance. The refractory containing carbon prevents the above reaction and thus is increased in corrosion resistance.

A nozzle for continuous casting is usually made of a refractory comprising oxides such as alumina and zirconia and graphite.

An alumina-graphite refractory is excellent in corrosion resistance against molten steel, but is poor in corrosion resistance against slag and powder floating on the surface of molten steel and, furthermore, is not sufficiently satisfactory in thermal impact resistance. In order to improve the thermal impact resistance, molten silica is introduced in the alumina-graphite, and at present a nozzle made of an alumina-silica-graphite material is used. However, a nozzle made of a material having a high silica content has poor corrosion resistance against steel slag having a high FeO content because $SiO_2$ reacts with FeO to thereby form a low melting substance and, as a result, is eluted as the low melting substance. Even in the alumina-silica-graphite nozzle, as the molten silica content is higher, the corrosion resistance of the nozzle is more poor. In recent years, since the proportion of production of high oxygen steel is increased and during the production of such high oxygen steel, steel slag having a high FeO content is formed, it has been desired to use a furnace material having a low silica content.

A zirconia-graphite refractory is excellent in corrosion resistance against molten steel and slag, but has disadvantages in that since zirconia has a high specific gravity and is expensive, the nozzle is heavy and is inconvenient to handle, and furthermore is expensive.

A two-layer structure refractory comprising a main body made of an alumina-graphite or alumina-silica-graphite refractory and a surface layer made of a zirconia-graphite refractory, said surface layer coming into contact with slag or powder is used. In one charge-continuous casting procedure, an alumina-graphite or alumina-silica-graphite refractory is sufficiently durable, but in two or more charge-continuous casting procedure, a two-layer structure using zirconia-graphite is used.

## DISCLOSURE OF INVENTION

A first invention of the present invention is to provide a refractory which is of high durability against molten pig iron, molten steel, molten slag, and so forth.

That is, the first invention is concerned with an aluminum oxynitride-containing refractory comprising at least 3 parts by weight of aluminum oxynitride and 0.5 to 60 parts by weight of carbon and/or a carbonaceous compound, the balance being other refractory substances.

Aluminum oxynitride is a solid solution of aluminum nitride and aluminum oxide. Aluminum oxynitride possesses such characteristics that heat resistance is high (it neither melts nor decomposes at temperatures not more than 2,000°C), chemical reactivity at high temperatures is poor (it is excellent in corrosion resistance particularly to FeO), a coefficient of thermal expansion is smaller than those of refractory materials such as alumina, magnesia and zirconia, and it hardly reacts with various molten metals. Thus, the present inventors have concluded that aluminum oxynitride is suitable for use as a starting material of a refractory to be used in areas which come into contact with molten pig iron, molten steel or a molten slag, for example, and thus which is necessary to have good corrosion resistance and thermal impact resistance.

Aluminum oxynitride is, as described above, a solid solution ($x$ $A\ell N \cdot y$ $A\ell_2O_3$) of aluminum nitride ($A\ell N$) and alumina ($A\ell_2O_3$), and depending on preparation conditions, aluminum oxynitride and so forth are accompanied.

It is desirable that aluminum oxynitride to be used as a starting material in the present invention be of high purity. However, aluminum oxynitride with the above impurities accompanied therein can also be used. It is preferred that the metallic aluminum content be small. From a viewpoint of the dense, hardness and chemical stability of the starting material, aluminum oxynitride with alumina accompanied therein is preferred over aluminum oxynitride with aluminum nitride accompanied therein.

The aluminum oxynitride content of the refractory of the first invention is at least 3 parts by weight. If the aluminum oxynitride content is less than 3 parts by weight, the above described effects cannot be obtained. As the aluminum oxynitride content is increased, the coefficient of thermal expansion of the refractory is decreased and, as a result, the refractory is excellent in thermal volume stability and is increased in corrosion resistance. The amount of the carbon or carbonaceous compound used is 0.5 to 60 parts by weight. As the carbon, cokes, earthy graphite, flake graphite, and so forth are used. The carbonaceous compound is a binder for the refractory, such as tar, pitch and resins, which is converted into carbon by thermal decomposition or polycondensation. The carbon component has corrosion resistance against molten pig iron, molten steel and molten slag and is excellent in thermal impact resistance and, furthermore, is effective in preventing oxidation of aluminum oxynitride. If the amount of the carbon and/or carbonaceous compound used is not more than 0.5 part by weight, the above described effects cannot be obtained. On the other hand, if it is not less than 60 parts by weight, the performance of aluminum oxynitride is reduced and it becomes carbonaceous in quality.

As refractory substances contained as the balance, non-oxide materials such as silicon carbide and silicon nitride, oxide materials such as zircon, zirconia, alumina, mullite, and magnesia, additives such as metallic silicon, ferrosilicon, and aluminum powder, binders such as aluminum phosphate, sodium silicate, clay and water, and auxiliary binders are used, if necessary. If silicon carbide powder is used in combination, oxidation of the carbon in the refractory is prevented. Furthermore, when silicon oxide is oxidized during use, the silicon carbide powder makes the structure of the refractory have reducing properties and thus it possesses an effect of preventing oxidation of aluminum oxynitride.

Based on the findings that aluminum oxynitride is excellent in corrosion resistance against molten slag, particularly FeO, has a low coefficient of thermal expansion, and is excellent in thermal impact resistance, and therefore can be used as a major component for use in production of a sliding nozzle, the second invention has been accomplished.

The second invention relates to a refractory for a sliding nozzle, which is made of a refractory substance containing 10 to 98 wt% of aluminum oxynitride.

- 10 -      0198925

If the amount of aluminum oxynitride used is not more than 10 wt%, the effect of addition of aluminum oxynitride can be obtained only insufficiently. On the other hand, if the amount of aluminum oxynitride added is not less than 98 wt%, the amounts of other essential refractory substances being added are inevitably reduced and thus the desired sliding nozzle becomes difficult to produce. Other refractory substances include alumina, mullite, flake graphite, earthy graphite, graphite electrode, metallic silicon, ferrosilicone, metallic aluminum powder, a phenol resin, pitch, and tar. One or more of these refractory substances are mixed with aluminum oxynitride, kneaded and then molded into a desired shape, such as a plate brick and a nozzle brick. When a phenol resin is used, either low temperature heating or high temperature firing is employed. The former heating method is employed mainly in the production of nozzle bricks, and the latter firing method is employed mainly in the production of plate bricks.

The properties and effects of the materials as used herein will hereinafter be explained. Aluminum oxynitride is, as described above, a solid solution of aluminum nitride (AℓN) and alumina (Aℓ$_2$O$_3$), and has such characteristics that heat resistance is high, chemical reactivity at high temperatures is low, and the coeffi-

cient of thermal expansion is smaller than those of refractory materials such as alumina, magnesia and zirconia. Therefore, a refractory for a sliding nozzle made of the aluminum oxynitride is greatly increased in resistance against slag, particularly resistance against FeO and thermal impact resistance. The amount of aluminum oxynitride used in the refractory of the second invention is as described above. All types of alumina conventionally used in a sliding nozzle can be used. That is, sintered alumina, fused alumina, and mullite, for example, can all be used. As the carbon material, those commonly used can be used. For example, cokes, earthy graphite, flake graphite, artificial graphite, and carbon black can be used. The amount of the carbon material added is not more than about 15 wt%. If the amount of the carbon material added is excess of about 15 wt%, the strength is not sufficiently high and the resistance against impact and abrasion is reduced.

Metallic silicon, ferrosilicon, metallic aluminum powder and so forth combine together with an organic binder or a carbonaceous material, for example, to thereby form a carbide and increase the strength of the refractory. One or more of such compounds is preferably added in an amount of 1 to 10 wt%.

As the organic binder such as a phenol resin, those compounds capable of improving the packing properties of formulated, processed and aged material before shaping and imparting a strength to bricks after molding, hardening or calcining can be used. In particular, compounds capable of maintaining the strength during the use at high temperatures are effectively used. A phenol resin has a sufficiently high strength even after being hardened at low temperatures and during the use, is carbonized to form a strong bonded member. The organic binder includes a phenol resin, a furan resin, a resin-modified tar, and a pitch. The amount of the organic binder added is preferably 2 to 15 wt% and more preferably 4 to 7 wt%. If the amount of the organic binder added is less than 2 wt%, packing and molding properties are poor and the strength is insufficiently low. On the other hand, if the amount is more than 15 wt%, the volatile content is increased and during the hardening process, cracks are easily formed. Moreover, the refractory becomes porous and, as a result, its corrosion resistance is reduced.

Another object of the present invention is to provide a nozzle for continuous casting, particularly a nozzle which can be used in multi continuous casting in which a single product is continuously cast, and also in continuous casting of high oxygen content steel.

The third invention relates to a nozzle for continuous steel casting, which is made of a reffactory substance containing 3 to 60 wt% of aluminum oxynitride and 10 to 40 wt% of carbon and/or graphite.

Aluminum oxynitride is used in a proportion of 3 to 60 wt%, and carbon and/or graphite in a proportion of 10 to 40 wt%. Aluminum oxynitride possesses good fire resistance and heat resistance as described above, excellent corrosion resistance against molten materials, a lower coefficient of thermal expansion compared with alumina, and is of low wetting. A nozzle containing aluminum oxynitride is excellent in thermal impact resistance even if molten silica is not added because the coefficient of thermal expansion of aluminum oxynitride is low. Furthermore, since the silica content of the nozzle is low, the nozzle has good corrosion resistance, particularly against steel slag having a high FeO content. The low wettability to molten material weakens the adhesion force of alumina depositing in the nozzle. This yields an advantage that the blocking in the nozzle is reduced.

If the aluminum oxynitride content is less than 3 wt%, the above good corrosion resistance and thermal impact resistance are obtained only insufficiently. As the aluminum oxynitride content is increased, the corrosion resistance and thermal impact resistance are increased. However, if the aluminum oxynitride content is not less than 60 wt%, the corrosion resistance and thermal impact resistance are improved only to a limited extent and, furthermore, since the proportion of other materials to be mixed is decreased, a good nozzle becomes difficult to produce.

Carbon and/or graphite is mixed in a proportion of 10 to 40 wt%. As carbon and graphite, amorphous carbon, artificial graphite, natural graphite, carbon black, pyrolytic graphite, carbon powder, and the like can be used. In particular, natural graphite is suitable from a viewpoint of increasing thermal impact resistance and oxidation resistance. If the proportion of carbon and/or graphite used is not more than 10 wt%, thermal impact resistance and corrosion resistance are reduced. On the other hand, if the proportion is not less than 40 wt%, the thermal conductivity is increased and nozzle blocking readily occurs.

As refractory substances which are added as the remainder, powdered materials and a binder are used. Powdered materials which can be used include alumina, bauxite, zirconia, molten silica, silicon carbide, silicon nitride, boron nitride, metallic aluminum, metallic silicon, ferrosilicon, magnesium oxide, and magnesia-alumina-spinel. As the binder, thermoplastic or thermosetting binders such as a phenol resin, an epoxy resin, a furan resin, a urethane resin, pitch, tar, anthracene oil and the like can be used. These powdered materials and a binder are kneaded along with the above described additives. Using the mixture thus prepared, a nozzle for casting is produced by the usual rubber press method and reduction firing method.

In continuous casting of two or more charges, a two layer structure nozzle of alumina-graphite or alumina-silica-graphite and zirconia-graphite has been forced to use. On the other hand, since the nozzle for casting of the present invention contains aluminum oxynitride which possesses good fire resistance, heat resistance, corrosion resistance, a low coefficient of thermal expansion, and low wettability to molten metals, it is sufficient to employ a single layer structure in the case of two or three charges. That is, in such a case, it is sufficient to use a nozzle of a single material. Furthermore, because of its low wettability to molten metals, if the nozzle is used in a section where alumina is deposited in a large amount, for example, a section the outside of which is exposed to the atmosphere above molten steel, a discharge outlet, an area to which the effect of discharge of inert gas to prevent blocking is not exerted, and a gas discharge part, nozzle blocking is improved.

BRIEF EXPLANATION OF THE DRAWINGS

Fig. 1 is an X-ray diffraction pattern of aluminum oxynitride; and

Figs. 2 to 9 each is a longitudinal sectional-view showing one embodiment of the nozzle for continuous steel casting according to the present invention.

BEST MODE FOR CARRYING OUT THE INVENTION

The present invention is described in greater detail with reference to the following examples.

EXAMPLE 1

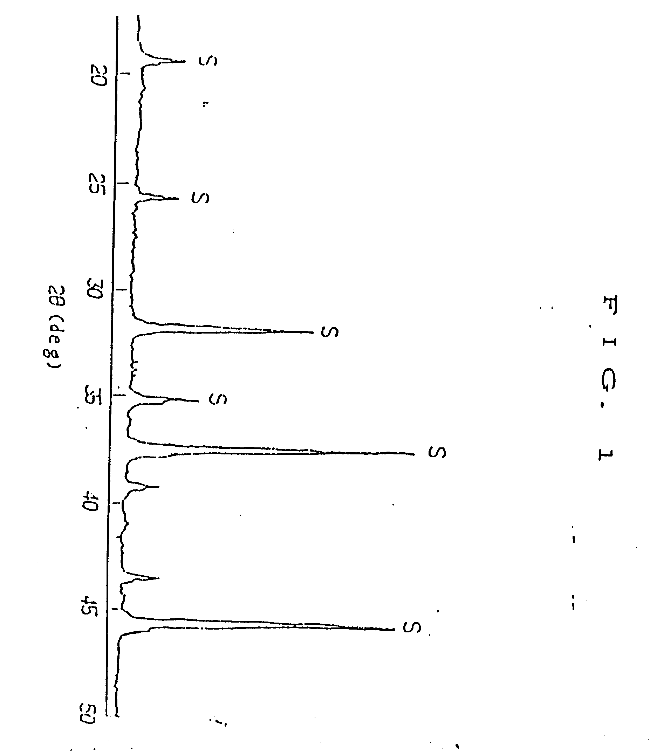

Sample Nos. 1 to 6 of Table 1 are examples of the monolithic refractory of the present invention. Compositions of starting materials shown in Table 1 are each well mixed and then, after addition of water, kneaded. Aluminum oxynitride was synthesized in an experimental room. Fig. 1 is an X-ray diffraction pattern of the aluminum oxynitride. In the figure, S indicates aluminum oxynitride. Each composition was poured into a mold having a height of 120 mm and a trapezoidal cross-section (bottom length: 53 mm; upper length: 36 mm; height: 20 mm), and also into a mold of 230 × 115 × 65 mm (in the form of a standard shape brick according to JIS R 2101), and then allowed to age therein for 24 hours under conditions of temperature 20 ± 5°C and humidity 80 to 85% and taken out of the molds. The molds thus produced were dried in an oven maintained at 105 to 110°C for 12 hours and, after embedding in cokes powder, heated in an electric furnace to 350°C and calcined at that temperature for 4 hours. 350°C was a temperature at which crystal water and volatile materials were removed.

In the test of corrosion resistance against molten metal, the calcined mold having the trapezoidal cross-section described above was used. These calcined molds were stuck to the inside of a crucible in a 15 kw output high frequency induction furnace to produce a cylinder. After introduction of pig iron (FC 25 according to JIS G 5501) in the cylinder, induction heating was started. When the temperature in the cylinder reached a temperature above 1,200°C, ferrous oxide (FeO) was introduced and raised in temperature to 1,550°C to melt the contents. The sample was allowed to react with the molten metal by maintaining it at 1,550°C for 5 hours. After discharging the molten metal and cooling, the sample was taken out and a degree of reduction in the thickness of an area which was most seriously corroded was calculated to compare corrosion resistance.

In connection with thermal impact resistance, the calcined mold having the standard shape brick according to JIS R 2101 was tested by the acoustic emission method (AE method). This AE method is a method recently employed for evaluation of thermal impact resistance of a refractory because it makes easy quantitative comparison. In accordance with this AE method, an elastic wave generated at the time of breakage of the structure of a refractory when a thermal stress is abruptly applied onto the refractory is read with as an AE generation amount by the use of a sensor, and the thermal impact resistance is evaluated based on the amount of the wave. As the total amount of AE generated (number of counts) is smaller, it is evaluated that thermal impact resistance is better. The calcined mold having the standard shape brick according to the JIS R 2101 was locally heated for about 20 sec. by applying a flame of oxygen-propane gas of about 1,650°C onto the center of the 230 × 115 mm surface. The total amount of AE generated (number of counts) was read with a commercially available apparatus (Model 302A produced by Dungan/Endevco Co., Ltd.).

It can be seen from Table 1 that the products of the present invention is greatly increased in corrosion resistance, which indicates resistance against ferrous oxide seriously corroding a refractory, as compared with the conventional products, and that thermal impact resistance, which indicates resistance against the breakage of the structure of the refractory by a thermal stress, is greatly increased.

In the case of Sample No. 1 in which no carbon or carbonaceous compound is contained, the corrosion resistance is not greatly increased. Also in the case of Sample No. 5 in which the proportion of carbon or carbonaceous compound added is too large, the corrosion resistance is not greatly increased even though the thermal impact resistance is satisfactory.

<div align="center">T A B L E  1</div>

| | Starting Material | Grain Size (mm) | Samples of the Present Invention (parts by weight) | | | | | | Comparative Example (parts by weight) Conventional Product |
|---|---|---|---|---|---|---|---|---|---|
| | | | No. 1 | No. 2 | No. 3 | No. 4 | No. 5 | No. 6 | |
| Aggregates | Sintered alumina | 4-1 | 20 | | 20 | | | 40 | 40 |
| | " | 1- | 15 | | | | | 15 | 15 |
| | " | 0.3- | 30 | | | | | 10 | 30 |
| | Aluminum oxynitride | 4-1 | 20 | 40 | 20 | 40 | 10 | | |
| | " | 1- | | 15 | 15 | 15 | 5 | | |
| | " | 0.3- | | 30 | 10 | 10 | | | |
| | " | 0.044- | | | 10 | 15 | | 3 | |
| | Silicon carbide | 4-1 | | | | | 30 | | |
| | " | 1- | | | | | 15 | | |
| | " | 0.3- | | | | 13 | | 12 | |
| | " | 0.044- | | | 15 | 15 | 10 | 3 | |
| | Earthy graphite | 0.3- | | 0.5 | | 1 | 10 | | |
| | Calcined alumina | 0.044- | 12 | 11.5 | 5 | 5 | | 12 | 12 |
| Binders | Kaolin clay | 0.149- | 1.5 | 1.5 | 1.5 | 1.5 | 1.5 | 1.5 | 1.5 |
| | Aluminum tripoly-phosphate | 0.149- | 0.7 | 0.7 | 0.7 | 0.7 | 0.7 | 0.7 | 0.7 |
| | Sodium silicate | 0.149- | 0.8 | 0.8 | 0.8 | 0.8 | 0.8 | 0.8 | 0.8 |
| | Cokes pitch | 0.3- | | | 2 | 3 | 5 | 2 | |
| | Total amount of refractory materials (parts by weight) | | 100 | 100 | 100 | 100 | 100 | 100 | 100 |

| | Starting Material | Samples of the Present Invention (parts by weight) | | | | | | Comparative Example (parts by weight) Conventional Product |
|---|---|---|---|---|---|---|---|---|
| | | No. 1 | No. 2 | No. 3 | No. 4 | No. 5 | No. 6 | |
| Corrosion resistance | Corrosion resistance index (with the conventional one as 100) | 93 | 63 | 49 | 44 | 91 | 54 | 100 |
| | Evaluation | Slightly good | Good | Good | Good | Slightly good* | Good | Normal |
| Thermal impact resistance | Total amount of AE counts (number of counts) | $11 \times 10^5$ | $6 \times 10^5$ | $6 \times 10^5$ | $5 \times 10^5$ | $4 \times 10^5$ | $8 \times 10^5$ | $22 \times 10^5$ |
| | Evaluation | Good | Good | Good | Good | Good* | Good | Normal |

\*   Partial embrittlement of the structure due to oxidation

- 22 -

0198925

## EXAMPLE 2

Sample Nos. 1 to 3 of Table 2 are examples of the shaped refractory of the present invention.

Starting materials shown in Table 2 were compounded, well mixed and then, after addition of a binder, kneaded. Aluminum oxynitride having the same purity as in Example 1 was used. The mixture was molded into a trapezoidal column shaped form of the same size as in Example 1 under a pressure of 600 kg/cm$^2$. The mold thus obtained was embedded in cokes powder, raised in temperature to 1,200°C in an electric furnace, and calcined therein by maintaining at that temperature for 4 hours. Corrosion resistance and thermal impact resistance were tested in the same manner as in Example 1.

It can be seen from Table 2 that the products of the present invention are superior in corrosion resistance and thermal impact resistance to the conventional ones. The products of the present invention as shown in Table 2 are suitable for use in the production of an immersion nozzle for production of steel.

0198925

## T A B L E   2

| | Starting Material | Grain Size (mm) | Products of the Present Invention (parts by weight) | | | Comparative Example (parts by weight) Conventional One |
|---|---|---|---|---|---|---|
| | | | No. 1 | No. 2 | No. 3 | |
| Aggregates | Sintered alumina | 2-0.149 | 4 | | 8 | 8 |
| | | 0.149- | 20 | | 37 | 40 |
| | Aluminum oxynitride | 2- | 4 | 8 | | |
| | | 0.149- | 20 | 40 | 3 | |
| | Natural graphite | 2-0.149 | 21 | 21 | 21 | 21 |
| | | 0.149- | 8 | 8 | 8 | 8 |
| | Silica | 0.6- | 10 | 10 | 10 | 10 |
| Binders | Metallic silicon powder | 0.07- | 3 | 3 | 3 | 3 |
| | Thermosetting resin | Liquid | 10 | 10 | 10 | 10 |
| Total | | | 100 | 100 | 100 | 100 |
| Corrosion resistance | Corrosion resistance index (with the conventional one as 100) | | 80 | 65 | 95 | 100 |
| | Evaluation | | Good | Good | Slightly good | Normal |
| Thermal impact resistance | Total amount of AE counts (number of counts) | | $3 \times 10^{2}$ | $1.5 \times 10^{2}$ | $3 \times 10^{3}$ | $4 \times 10^{3}$ |
| | Evaluation | | Good | Good | Slightly good | Normal |

- 23 -

EXAMPLE 3

Sample Nos. 1 to 3 of Table 3 are examples of a blast furnace tapping hole material, which is made of the refractory of the present invention. Compositions comprising the starting materials shown in Table 3 were each well mixed and after addition of a binder, kneaded. Aluminum oxynitride having the same purity as in Examples 1 and 2 was used. Each kneaded composition was molded into a trapezoidal column-shaped form of the same size as in Example 1 under a pressure of 100 kg/cm$^2$. The mold thus obtained was dried in an oven maintained at 105 to 110°C for 12 hours, and then temperature was raised to 350°C at a temperature raising rate of 150°C per hour in an electric furnace and maintained at that temperature for 6 hours so as to achieve baking treatment. The sample thus heat-treated was stuck to the inside of the usual rotary corrosion test furnace to produce a cylinder. The inside surface of the cylinder sample was abruptly heated to 1,500°C by the use of an oxygen/propane gas burner and, thereafter, pig iron for the blast furnace for production of steel and blast furnace slag having a base ($CaO/SiO_2$) of 1.22 were introduced in the cylinder at a weight ratio of 10:3. While heating with the burner so as to maintain the temperature in the cylinder at 1,550 ± 20°C, the furnace was rotated at 30 rpm. In this way, the sample, molten metal and molten slag were reacted. After 2 hours, the molten mass was discharged from the cylinder. Subsequently, the same material as above was reacted with the sample under the same conditions as described above and then discharged. This procedure was repeated four times and the amount of the sample corroded was measured. A rate of reduction in the thickness of an area which was seriously corroded was calculated, and corrosion resistance was compared. It can be seen from Table 3 that the products of the present invention are superior in corrosion resistance to the conventional one. By using aluminum oxynitride in place of fused alumina which has been considered superior as an aggregate of high corrosion resistance, the corrosion resistance of the blast furnace tapping hole material can be increased. The product of the present invention can be applied to those tapping holes for filling up not only of blast furnace but also all other ferro and non-ferro melting furnaces. Although in this example anhydrous coal tar is used as a binder, other binders such as a thermosetting resin can be used.

0198925

<div align="center">

**T A B L E    3**

</div>

| | Starting Material | Grain Size (mm) | Products of the Present Invention (parts by weight) | | | Comparative Example (parts by weight) |
|---|---|---|---|---|---|---|
| | | | No. 1 | No. 2 | No. 3 | Conventional One |
| Aggregates | Fused alumina | 4-1 | 13 | 6 | | 20 |
| | " | 1-0.1 | 8 | 4 | | 12 |
| | " | 0.25-0 | 7 | 3 | | 11 |
| | Aluminum oxynitride | 4-2 | 5 | 10 | 13 | |
| | " | 3-0 | 10 | 20 | 30 | |
| | Silicon carbide | 0.1-0 | 27 | 27 | 27 | 27 |
| | Earthy graphite | 0.3-0 | 5 | 5 | 5 | 5 |
| | Cokes | 1-0 | 10 | 10 | 10 | 10 |
| Binders | Powdered coal pitch | 0.3-0 | 2 | 2 | 2 | 2 |
| | Sericite | 0.1-0 | 13 | 13 | 13 | 13 |
| | Anhydrous coal tar | Liquid | 16.6 | 16.8 | 17.0 | 16.4 |
| Total | | | 116.6 | 116.8 | 117.0 | 116.4 |
| Corrosion resistance | Corrosion resistance index (with the conventional one as 100) | | 86 | 74 | 66 | 100 |
| | Evaluation | | Good | Good | Good | Normal |

The refractory for a sliding nozzle of the present invention is described in greater detail with reference to the following examples.

### EXAMPLE 4

Compositions (wt%) and characteristics of a sliding nozzle and calcined bricks for a plate are shown in Table 4. Sample Nos. 1, 2, 7 and 10 in which aluminum oxynitride is not added are comparative examples. Calcination was carried out at 1,300°C for 1 hour in a reduction atmosphere.

– 28 –

0198925

## T A B L E 4

|  | Sample No. | | | | | | | | | | | |
|---|---|---|---|---|---|---|---|---|---|---|---|---|
|  | 1 | 2 | 3 | 4 | 5 | 6 | 7 | 8 | 9 | 10 | 11 | 12 |
| Aluminum oxynitride | -- | -- | 10 | 30 | 60 | 89 | -- | 60 | 60 | -- | 30 | 60 |
| Synthetic mullite | -- | 28 | -- | -- | -- | -- | -- | -- | 37 | 10 | 10 | -- |
| ZRM *3 | -- | -- | -- | -- | -- | -- | -- | -- | -- | 20 | 20 | 20 |
| Sintered alumina | 89 | 61 | 79 | 59 | 29 | -- | 87 | 27 | -- | 59 | 29 | 9 |
| Carbon powder | 8 | 8 | 8 | 8 | 8 | 8 | 8 | 8 | -- | 8 | 8 | 8 |
| Silicon powder | 3 | 3 | 3 | 3 | 3 | 3 | -- | -- | 3 | 3 | 3 | 3 |
| Metallic aluminum powder | -- | -- | -- | -- | -- | -- | 5 | 5 | -- | -- | -- | -- |
| Phenol resin | +6 | +6 | +6 | +6 | +6 | +6 | +6 | +6 | +6 | +6 | +6 | +6 |
| Apparent specific gravity | 3.44 | 3.23 | 3.43 | 3.41 | 3.38 | 3.36 | 3.45 | 3.38 | 3.42 | 3.26 | 3.24 | 3.30 |
| Bulk specific gravity | 3.10 | 2.89 | 3.10 | 3.08 | 3.06 | 2.96 | 3.11 | 3.07 | 3.09 | 2.94 | 2.91 | 3.01 |
| Apparent porosity (%) | 9.6 | 10.4 | 9.7 | 9.5 | 9.3 | 10.3 | 9.2 | 9.1 | 10.2 | 10.0 | 9.8 | 9.7 |
| Compression strength (kg/cal) | 1100 | 1300 | 1160 | 1290 | 1320 | 1220 | 920 | 940 | 1240 | 1120 | 1170 | 1150 |
| Flexural strength ($kg/cm^2$) | | | | | | | | | | | | |
| Room temperature | 290 | 310 | 288 | 300 | 300 | 280 | 236 | 242 | 292 | 284 | 296 | 292 |
| At 1,400°C | 134 | 90 | 135 | 150 | 148 | 144 | 94 | 98 | 128 | 128 | 136 | 142 |

TABLE   4   (cont'd)

| | Sample No. | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Coefficient of thermal expansion (at 1,000°C) | 0.70 | 0.56 | 0.68 | 0.66 | 0.64 | 0.64 | 0.69 | 0.64 | 0.66 | 0.52 | 0.50 | 0.54 |
| Corrosion resistance index *1 | | | | | | | | | | | | |
| Slag | 100 | 136 | 90 | 52 | 45 | 44 | 101 | 45 | 56 | 122 | 88 | 65 |
| Molten metal | 100 | 118 | 110 | 99 | 98 | 98 | 99 | 98 | 102 | 110 | 104 | 99 |
| Torch test (cracks) *2 | C | B | A | A | A | A | C | A | A | B | AA | A |

*1   The slag portion was dipped in ladle slag.   Indicated with the amount of corrosion of the conventional one (Sample No. 1) as 100.

*2   The test sample was subjected to flexural stress load and then its surface was heated for a given time with an oxygen-acetylene burner.  Then, the formation of cracks and the degree of development of the cracks were examined.  The rating was as follows.

AA:   Slight crack
 A:   Small cracks
 B:   Intermediate cracks
 C:   Large cracks

*3   Fused mullite and zirconia starting material.  A typical chemical composition is 48.1% $Al_2O_4$, 17.7% $SiO_2$ and 33.7% $ZrO_2$.

Practical Test

The plate brick of Sample No. 5 was tested in a 150 ton ladle.  Sample No. 1 was 3 charges whereas Sample No. 5 was 3-5 charges.  The average number was increased to 3.70.

EXAMPLE 5

Compositions (wt%) and characteristics of a sliding nozzle and uncalcined brick for the nozzle are shown in Table 5.  Sample No. 1 not containing aluminum oxynitride is a comparative example.  Drying was conducted at 200°C for 30 minutes.

TABLE 5

| | Sample No. | | | | | | | | | | |
|---|---|---|---|---|---|---|---|---|---|---|---|
| | 1 | 2 | 3 | 4 | 5 | 6 | 7 | 8 | 9 | 10 | 11 |
| Aluminum oxynitride (3-1 mm) | -- | -- | 15 | 35 | 20 | 20 | 20 | 20 | 15 | 15 | 15 |
| Aluminum oxynitride (1-0.5 mm) | -- | 10 | 15 | 15 | 15 | 15 | 15 | 15 | 15 | 5 | 15 |
| Aluminum oxynitride (not more than 0.5 mm) | -- | 10 | 20 | 40 | 25 | 25 | 25 | 25 | 20 | 20 | 20 |
| Coarsely divided alumina | 35 | 35 | 20 | -- | 15 | 15 | 15 | 15 | 20 | 20 | 20 |
| Intermediately divided alumina | 15 | 5 | -- | -- | -- | -- | -- | -- | -- | -- | -- |
| Finely divided alumina | 40 | 30 | 20 | -- | 18 | 16 | 15 | 15 | 24 | 20 | 14 |
| Metallic aluminum powder | 6 | 6 | 6 | 6 | 3 | 5 | 6 | 6 | 6 | 6 | 6 |
| Carbon powder | 4 | 4 | 4 | 4 | 4 | 4 | 4 | 4 | -- | 4 | 10 |
| Phenol resin | +5 | +5 | +5 | +5 | +5 | +5 | +3 | +7 | +5 | +5 | +5 |
| Apparent specific gravity | 3.33 | 3.29 | 3.28 | 3.26 | 3.31 | 3.29 | 3.28 | 3.27 | 3.32 | 3.28 | 3.19 |
| Bulk specific gravity | 3.09 | 3.01 | 2.98 | 2.97 | 3.05 | 3.02 | 2.88 | 3.12 | 3.07 | 2.98 | 2.88 |
| Apparent porosity (%) | 7.2 | 7.6 | 7.4 | 6.9 | 7.0 | 7.8 | 13.0 | 4.3 | 7.9 | 7.4 | 8.6 |
| Compression strength ($kg/cm^2$) | 830 | 910 | 960 | 950 | 930 | 900 | 720 | 1100 | 1150 | 960 | 680 |
| Bending strength | | | | | | | | | | | |
| Room temperature ($kg/cm^2$) | 170 | 190 | 205 | 200 | 180 | 195 | 140 | 250 | 220 | 205 | 130 |
| At 1,400°C ($kg/cm^2$) | 93 | 110 | 115 | 110 | 90 | 105 | 63 | 120 | 120 | 115 | 60 |

0198925

| | Sample No. | | | | | | | | | | |
|---|---|---|---|---|---|---|---|---|---|---|---|
| | 1 | 2 | 3 | 4 | 5 | 6 | 7 | 8 | 9 | 10 | 11 |
| FeO resistance index (with that of Sample 1 as 100) | 100 | 95 | 75 | 70 | 80 | 75 | 98 | 75 | 80 | 75 | 75 |
| Degree of reduction due to oxidation (wt%) 800°C × 2 hr | 3.9 | 3.5 | 2.8 | 2.0 | 3.8 | 3.1 | 3.9 | 2.9 | 1.5 | 2.8 | 4.2 |
| Spalling test 1,400°C × 10 min air cooling (number of recycles at the occurrence of peeling) | 5 | 5 | 7 | 8 | 5 | 7 | 9 | 6 | 6 | 7 | 9 |

It can be seen from the results of Table 5 that the products of the present invention are greatly improved in resistance against slag, particularly ferrous oxide over the conventional one, and also in resistance against the breakage of structure of refractory due to thermal stress. Additionally, it can be seen that resistance against oxidation is improved.

In the case of the uncalcined brick in Table 5, if the proportion of alumina is too high as in the composition of Sample No. 2, no appreciable increase can be obtained. If the amount of metallic aluminum added is small as in the composition of Sample No. 5, the resistance against FeO is good, but resistance against oxidation and spalling is improved only insufficiently. If the amount of the binder used is small as in the composition of Sample No. 7, the porosity is increased and spalling resistance is increased, but corrosion resistance is improved only insufficiently.

Examples of the nozzle for continuous steel casting of the present invention will hereinafter be explained.

### EXAMPLE 6

Compositions and characteristics of the products of the present invention are shown in Table 6.

By comparison of the products of the present invention with the comparative sample, it can be seen that they are nearly equal in respect of strength and so forth, but the products of the present invention are greatly superior in corrosion resistance and thermal impact resistance to the comparative sample.

| Composition (parts by weight) | Products of the Present Invention | | | Comparative Example |
|---|---|---|---|---|
| | No. 1 | No. 2 | No. 3 | Alumina-graphite |
| Aluminum oxynitride | 5 | 41 | 58 | -- |
| Graphite | 27 | 27 | 24 | 30 |
| Alumina | 65 | 28 | 15 | 69 |
| Silicon carbide | 3 | 3 | 3 | 3 |
| Phenol resin | 11 | 11 | 11 | 11 |
| Apparent porosity (%) | 15.6 | 15.6 | 15.5 | 15.7 |
| Apparent specific gravity | 3.10 | 3.04 | 3.09 | 3.06 |
| Bulk specific gravity | 2.62 | 2.56 | 2.61 | 2.58 |
| Bending strength ($kg/cm^2$) (M) | 123 | 122 | 120 | 123 |
| Modulus of elasticity ($kg/mm^2$) (E) | 1145 | 1097 | 1074 | 1215 |
| Thermal impact resistance (M/E) | 1074 | 1112 | 1117 | 1010 |
| Coefficient of thermal expansion (at 1,600°C) (%) | 0.96 | 0.91 | 0.89 | 0.99 |
| Corrosion resistance (mm/hr) | | | | |
|    Steel | 0.25 | 0.20 | 0.15 | 0.30 |
|    Slag | 6.30 | 5.50 | 5.00 | 6.80 |

| Thermal impact resistance test | Products of the Present Invention | | | Comparative Example Alumina-graphite |
| --- | --- | --- | --- | --- |
| | No. 1 | No. 2 | No. 3 | |
| Number of repeated heating at 1,400°C/cooling with water cycles | 3 No abnormality | 3 No abnormality | 3 No abnormality | Development of cracks at the third cycle |

- 36 -

0198925

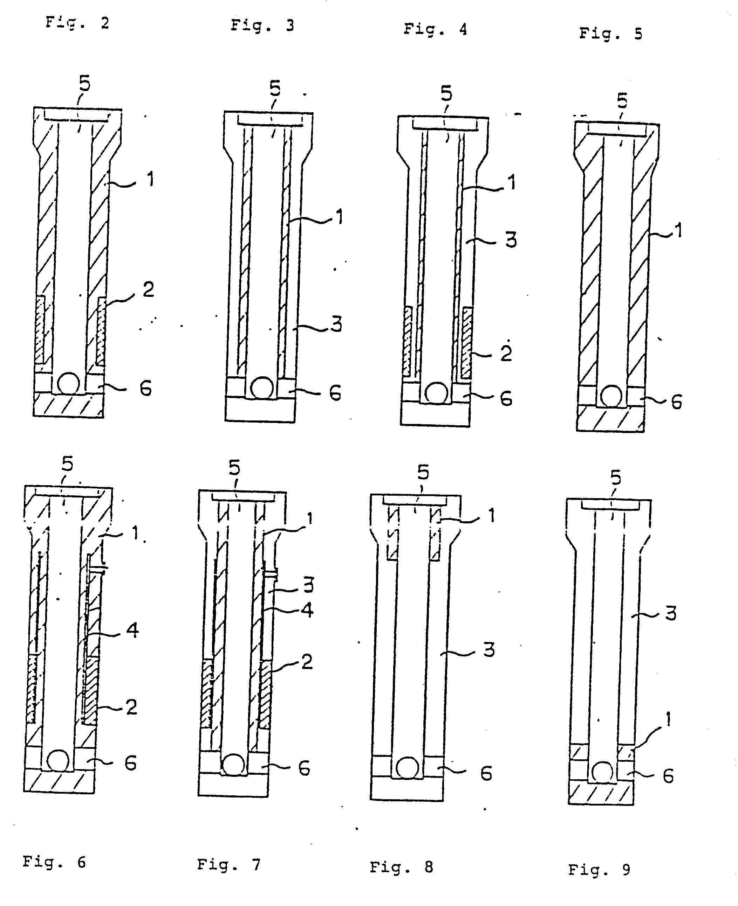

Figs. 2 to 9 illustrate embodiments of the nozzle for casting of the present invention. The reference numeral 1 indicates the material of the present invention; 2, zirconia-graphite; and 3, conventional material such as alumina-graphite. Fig. 2 illustrates an embodiment in which the zirconia-graphite material 2 is provided on the outside of the material of the present invention 1, particularly on a part coming into contact with slag. Figs. 3 and 4 illustrate two and three-layer structures, respectively, in which the material of the present invention 1 is used as the inner surface of a nozzle, and the conventional material 3 is used as the outside surface of the nozzle. Fig. 5 illustrates a single layer structure in which only the material of the present invention 1 is used. Figs. 6 and 7 illustrate embodiments in which a slit 4 for discharge of gas is provided. Figs. 8 and 9 illustrate embodiments in which the material of the present invention 1 is provided in the neighborhood of a molten steel inlet 5 or outlet 6 which is a part deposits are liable to yield.

INDUSTRIAL APPLICABILITY

As described above, since the aluminum oxynitride-containing refractory of the present invention is excellent in corrosion resistance against molten pig iron, molten steel and molten slag, and also in thermal impact resistance, it can be used as a refractory lining material coming contact with molten materials. Thus, it can be used in wide variety of fields such as a blast furnace for lining; a tapping spout; a pig iron ladle, a pig iron transfer ladle and car, a tundish, an immersion nozzle, a tapping spout material of electric furnace, etc.

The sliding nozzle refractory of the present invention is greatly increased in slag resistance, FeO resistance and spalling resistance. Thus, the life time of the sliding nozzle can be greatly increased.

The nozzle for continuous steel casting of the present invention is durable to multi-continuous casting and furthermore to continuous casting of high oxygen content steel.

CLAIMS:

1.  An aluminum oxynitride-containing refractory comprising at least 3 parts by weight of aluminum
oxynitride and 0.5 to 60 parts by weight of at least one
of carbon and carbonaceous compound, the balance being
other refractory substance.

2.  The aluminum oxynitride-containing refractory as claimed in Claim 1, comprising 3 to 40 parts by
weight of aluminum oxynitride and 0.5 to 60 parts by
weight of at least one of earthy graphite and silicon
carbide, the balance being at least one of sintered
alumina and calcined alumina.

3.  A refractory for a sliding nozzle, comprising a refractory substance containing 10 to 98 wt% of
aluminum oxynitride.

4.  The refractory for a sliding nozzle as
claimed in Claim 3, comprising a refractory substance
containing 10 to 89 wt% of aluminum oxynitride, 29 to
79 wt% of sintered alumina, 15 wt% or less of carbon
powder, 1 to 10 wt% of silicon powder, and 2 to 15 wt%
of a phenol resin.

5.  A nozzle for continuous steel casting,
comprising a refractory substance containing 3 to 60 wt%
of aluminum oxynitride and 10 to 40 wt% of at least one
of carbon and graphite.

6. The nozzle for continuous steel casting as claimed in Claim 5, comprising a refractory substance containing 5 to 58 wt% of aluminum oxynitride, 24 to 27 wt% of graphite, 15 to 65 wt% of alumina, 3 wt% of silicon carbide, 11 wt% of a phenol resin.

F I G. 1

$2\theta$ (deg)

Fig. 2    Fig. 3    Fig. 4    Fig. 5

Fig. 6    Fig. 7    Fig. 8    Fig. 9

## INTERNATIONAL SEARCH REPORT

International Application No  PCT/JP85/00561

**I. CLASSIFICATION OF SUBJECT MATTER** (if several classification symbols apply, indicate all) [3]

According to International Patent Classification (IPC) or to both National Classification and IPC

Int. Cl$^4$    C04B35/00, B22D11/10, 37/00

**II. FIELDS SEARCHED**

| Minimum Documentation Searched [4] | |
|---|---|
| Classification System | Classification Symbols |
| IPC | C04B35/00, 35/04, 35/10, 35/58 |

| Documentation Searched other than Minimum Documentation to the Extent that such Documents are Included in the Fields Searched [5] |
|---|
| |

**III. DOCUMENTS CONSIDERED TO BE RELEVANT** [14]

| Category* | Citation of Document, [16] with indication, where appropriate, of the relevant passages [17] | Relevant to Claim No [18] |
|---|---|---|
| A | JP, A, 57-27971 (Kurosaki Refractories Co., Ltd.) 15 February 1982 (15. 02. 82) (Family: none) | 1 - 6 |

* Special categories of cited documents: [16]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

**IV. CERTIFICATION** ·

| Date of the Actual Completion of the International Search [2] | Date of Mailing of this International Search Report [3] |
|---|---|
| December 12, 1985 (12. 12. 85) | December 23, 1985 (23. 12. 85) |
| International Searching Authority [1] | Signature of Authorized Officer [18] |
| Japanese Patent Office | |

Form PCT/ISA/210 (second sheet) (October 1981)